# EUROPÄISCHE PATENTSCHRIFT

(11) **EP 4 419 810 B1**
(45) Veröffentlichungstag und Bekanntmachung des Hinweises auf die Patenterteilung: **08.10.2025**
(21) Anmeldenummer: 22803236.3
(22) Anmeldetag: 17.10.2022
(51) Int. Cl.: F16D 65/00, F16D 55/22, F16D 55/00

(54) **SCHEIBENBREMSE**
DISK BRAKE
FREIN À DISQUE

(30) Priorität: 21.10.2021 DE 102021127424
(43) Veröffentlichungstag der Anmeldung: 28.08.2024
(73) Patentinhaber: KNORR-BREMSE Systeme für Nutzfahrzeuge GmbH, 80809 München (DE)
(72) Erfinder: RGUICHI, Abdelaziz, 82140 Olching (DE); WEBER, Ralf, 80997 München (DE); BUCH, Andreas, 82024 Taufkirchen (DE); FISCHER, Rudolf, 85435 Erding (DE); WERTH, Alexander, 80999 München (DE); RIBA, Zoltan, 82140 Olching (DE); AKBALIK, Erkan, 81245 München (DE)
(86) Internationale Anmeldenummer: PCT/EP2022/078849
(87) Internationale Veröffentlichungsnummer: WO 2023/066869

(56) Entgegenhaltungen:
- EP-A1- 3 470 700
- WO-A1-2015/199412
- FR-A1- 3 046 644
- US-A1- 2021 123 489

## Beschreibung

Die Erfindung betrifft eine Scheibenbremse nach dem Oberbegriff des Anspruchs 1.

Die geltenden Umweltanforderungen und die damit verbundenen gesetzliche Grundlagen werden zukünftig erhöhte Anforderungen zur Vermeidung von Feinstaub mit sich bringen. Somit wird es notwendig, technische Lösungen für Scheibenbremsen für ein Nutzfahrzeug zu entwickeln, die in der Lage sind Bremsstaub, insbesondere den Feinstaubanteil von Bremsstaub, zu minimieren und idealerweise dessen Emission zu verhindern.

Die hierzu vorliegenden technischen Lösungen, die sich in erster Linie auf den PKW-Bereich konzentrieren, sind weitgehend darauf angelegt den Bremsstaub aus dem die Scheibenbremse umgebenen Bauraum, mit oder ohne Hilfe von Luftdruck, vorzugweise mit einer Absaug- und Abscheideanlage, durch einen Filter zu leiten und zu sammeln. Hierzu ist es meist notwendig den umgebenden Bauraum einzugrenzen, indem Abdeck- bzw. Abschirmbleche um die Radbremse verbaut werden (siehe z.B. die US 2010/0096226 A1).

Aus der WO 2008/083884 A1 ist der Einsatz einer solchen Absaug- und Abscheideanlage bekannt, die einerseits der Bremsscheibe einer Scheibenbremse einen Feinstaubfilter und andererseits einen Lüfter aufweist und die beide in einer Radfelge positioniert sind, wobei der Feinstaubfilter gegenüber der Umgebung hermetisch abgedichtet an der Felge gehalten ist.

Die EP 2 585 730 B1 offenbart eine auch für den Einsatz an Nutzfahrzeugen geeignete gattungsgemäße Scheibenbremse mit einer Absaug- und Abscheideanlage. Die Scheibenbremse weist einen eine Bremsscheibe übergreifenden Bremssattel auf, in dem mit Reibbelägen versehene Bremsbeläge angeordnet sind, die jeweils mit ihrem Reibbelag beidseitig an Reibringflächen der Bremsscheibe anpressbar sind, wobei die Reibringe außerhalb des Überdeckungsbereiches der Reibbeläge mit einem gegenüber dem Bremssattel fest stehenden Gehäuse abgedeckt sind, das mit einer Saugeinrichtung verbunden ist, wobei zwischen dem Gehäuse und der Saugeinrichtung eine Entstaubungsvorrichtung vorgesehen ist. Diese Konstruktion hat sich an sich gut bewährt, soll aber weiter optimiert werden. So kann die Umgebung des Fahrzeugs, vornehmlich die Verhältnisse im Radkasten und innerhalb der Felge, durch den Fahrtwind für eine diffuse Verwirbelung des entstehenden Bremsstaubs sorgen. Ebenso können die Abdeckblech kaum derart gestaltet werden, dass die Bremse komplett gekapselt ist. Denn eine weitergehende Kapselung der Bremse könnte in entsprechenden thermischen Problemen der Reibpaarung resultieren.

Aus WO 2015/199412 A1 ist eine Scheibenbremse mit einer Absaugrohranordnung bekannt.

Der Erfindung liegt die Aufgabe zugrunde, eine Scheibenbremse der gattungsgemäßen Art so weiterzuentwickeln, dass ein Entweichen des Bremsabriebs in die Umgebung mit einfachen konstruktiven Mitteln weitergehend verhindert wird. Diese Aufgabe wird durch eine Scheibenbremse mit den Merkmalen des Anspruchs 1 gelöst. Vorteilhafte Ausgestaltungen und Weiterbildungen sind in den Unteransprüchen angegeben.

Nach Anspruch 1 wird eine Scheibenbremse mit einem eine Bremsscheibe übergreifenden Bremssattel und einem den Bremsscheibenrand umgreifenden rahmenartigen Bremsträger geschaffen. Der Bremsträger weist jeweils einen Belagschacht beidseits der Bremsscheibe auf, wobei in jeden der Belagschächte jeweils einer von zwei mit einem Reibbelag und einer Rückenplatte versehenen Bremsbelägen eingesetzt ist, und wobei der Bremssattel eine Öffnung oberhalb der Bremsscheibe aufweist, durch welche die Bremsbeläge in die Belagschächte einsetzbar sind, wobei die Bremsbeläge jeweils (mit Hilfe einer Zuspanneinrichtung und vorzugsweise mit einer Schiebesattelkonstruktion) mit ihrem Reibbelag an Reibringflächen der Bremsscheibe anpressbar sind, und mit einer Absaugrohranordnung zum Absaugen von bei Bremsungen entstehenden Abrieb, die an eine insbesondere fahrzeugseitig vorgesehene Ansaug- und Abscheideanlage für Bremsstaub anschließbar ist. Dabei ist die Öffnung des Bremssattels ganz oder im Wesentlichen mit wenigstens einem Abdeckelement, insbesondere mit einem am Bremssattel befestigten Abdeckblech abgedeckt und die Absaugrohranordnung weist eines oder mehrere Absaugrohre auf und ist als eine wechselbare Einheit ausgebildet, die am Bremsträger befestigt ist.

Erfindungsgemäß wird jeweils ein sehr hoher Anteil des bei Bremsungen entstehenden Abriebs sicher aufgefangen.

Dabei kann nach einer Variante vorgesehen sein, dass die Absaugrohranordnung bezogen auf eine bevorzugte Drehrichtung der Bremsscheibe bei Vorwärtsfahrt auslaufseitig am Bremsträger befestigt ist. Vorteilhaft daran ist, dass die Absaugung direkt an der auslaufenden Seite der Bremsscheibe stattfinden kann. Die jeweilige Ansauganordnung ist zudem sicher und stabil an den Bremsträger angebunden und kann im Ganzen getauscht werden. Durch die Anbindung an den Bremsträger ist zudem eine Nachrüstung bereits im Feld befindlicher Bremsen möglich. Sämtlichen Ausführungsvarianten ist somit gemeinsam, dass sie sich gut für im Feldbefindliche Scheibenbremsen zur Nachrüstung aber auch für die Erstausrüstung eignen.

Nach einer vorteilhaften Ausgestaltung kann vorgesehen sein, dass die Absaugrohranordnung mittels einer Befestigungsschraube, die ein Befestigungselement, insbesondere ein Befestigungsblech, durchsetzt, das mit einem oder mehreren der Absaugrohre verbunden ist, an den Bremsträger angeschraubt ist. Der Bremsträger wird derart für eine besonders einfache und stabile Anbindung der wechselbaren Absaugrohranordnung genutzt.

Nach zweckmäßigen und vorteilhaften Varianten dieser Ausgestaltung kann beispielsweise vorgesehen sein, dass die Absaugrohranordnung mittels der Befestigungsschraube, die ein Befestigungsblech durchsetzt, an eine Axialseite des Bremsträger angeschraubt ist oder es kann vorgesehen sein, dass die Absaugrohranordnung mittels der Befestigungsschraube, die ein Befestigungsblech durchsetzt, bezogen auf den Bremssattel an die Unterseite des Bremsträger angeschraubt ist. Beide Orte eignen sich sehr gut für die Befestigung der Saugrohranordnung, wobei die Anbindung unterhalb des Bremsträgers den zusätzlichen Vorteil bietet, dass in diesem Bereich relativ viel Raum für die Realisierung der entsprechenden Anbindung zur Verfügung steht.

Es kann optional vorgesehen sein, dass das oder die Absaugrohre, die sich in einen Spalt zwischen dem Bremsträger und der Bremsscheibe erstrecken, ferner mittels Befestigungsmitteln wie Befestigungsklipsen am Bremsträger befestigt ist/sind.

Nach einer zweckmäßigen Weiterbildung kann vorzugsweise vorgesehen sein, dass die Absaugrohranordnung eine Schnittstelle zum Anschluss an eine Ansaug- und Abscheideanlage eines Fahrzeugs aufweist.

Nach weiteren vorteilhaften Weiterbildungen kann vorgesehen sein, dass die Absaugrohranordnung zwei oder mehre einzelne endseitig offene Absaugrohre aufweist, die in ein gemeinsames Absaugrohr zusammengeführt sind, welches zu der Schnittstelle führt oder diese aufweist. Es kann aber auch vorgesehen sein, dass die Absaugrohranordnung wenigstens ein umfangsgeschlossenes ringartiges Absaugrohre aufweist, das in ein damit verbundenes weiteres Absaugrohr mündet, welches zu der Schnittstelle führt oder diese aufweist.

Nach vorteilhaften Varianten kann vorgesehen sein, dass die Absaugrohranordnung ein sich axial erstreckendes Absaugrohr oder einen sich axial erstreckenden Abschnitt eines Absaugrohres aufweist, welches/welcher in einen axialen Spalt zwischen dem Bremssattel und dem Bremsträger eingreift. Es kann aber auch optional oder alternativ vorgesehen sein, dass die Absaugrohranordnung (ein sich radial erstreckendes Absaugrohr oder einen sich radial erstreckenden Abschnitt eines Absaugrohres aufweist, welches/welcher in einen radialen Spalt zwischen dem Bremsträger und der Bremsscheibe eingreift.

Es kann sodann vorgesehen sein, dass das oder die Absaugrohre jeweils eine oder mehrere Ansaugöffnungen aufweisen, die zum Beispiel durch Fenster in der Wandung der Rohe oder durch einen oder mehrere Schlitze gebildet sein können.

So kann nach einer besonders einfach umsetzbaren und gut nachrüstbaren Variante auch vorgesehen sein, dass ein Absaugrohr aufweist, dass als an einer Seite geschlitztes Profil ausgebildet ist.

Zu erwähnen ist noch, dass die Absaugrohre und weiteren Rohrelemente sowie ggf. auch weitere Elemente wie Befestigungslaschen oder Schrauben oder dgl. vorzugweise aus Metall, insbesondere aus einem Stahl, gefertigt sein können, so dass sie stabil und für den Einsatz an der Scheibenbremse genügend hitzebeständig ausgelegt sind.

Weitere vorteilhafte Ausbildungen der Erfindung werden in den Unteransprüchen gekennzeichnet.

Ausführungsbeispiele der Erfindung werden nachfolgend anhand der beigefügten Zeichnungen beschrieben. Merkmale dieser Ausführungsbeispiele sind auch bei anderen nicht dargestellten Ausführungsbeispielen der Erfindung einzeln oder gemeinsam nutzbar. Die Erfindung ist nicht auf dieses Ausführungsbeispiel beschränkt, sondern im Rahmen der Ansprüche auch anders als dargestellt und insbesondere auch äquivalent umsetzbar. Es zeigen:
- Fig. 1: eine erste erfindungsgemäße Scheibenbremse in einer perspektivischen Ansicht;

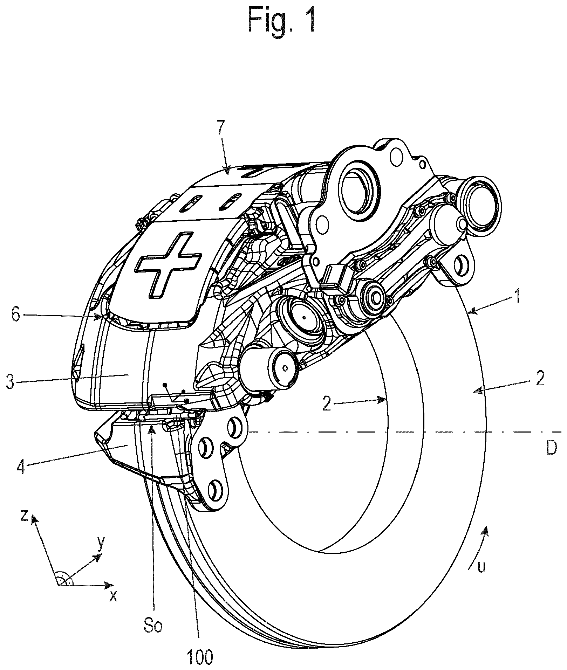

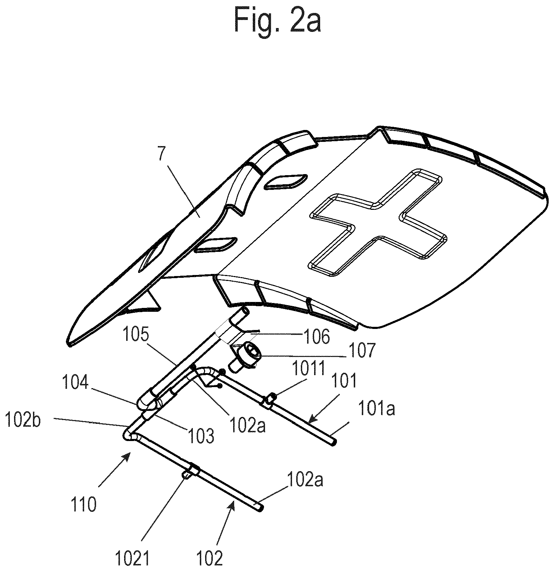

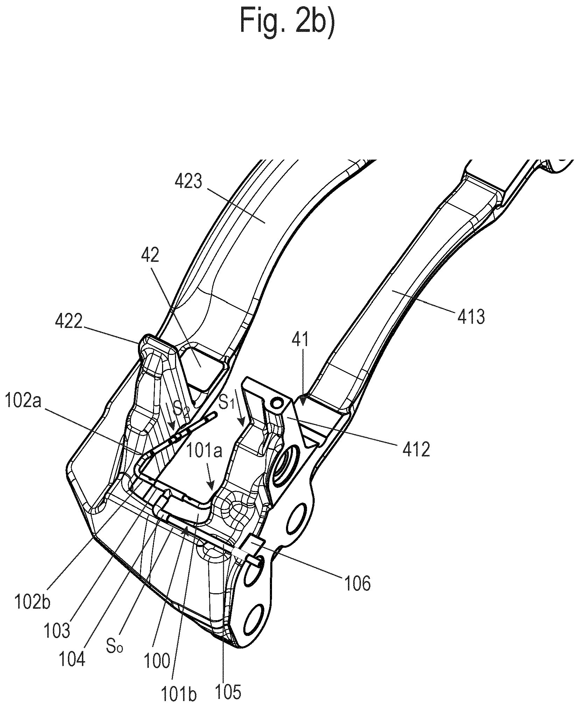

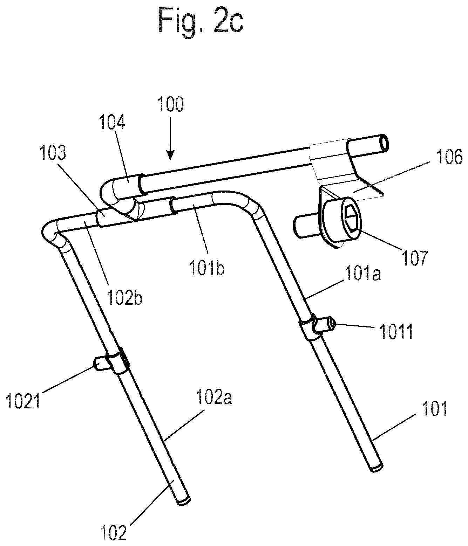

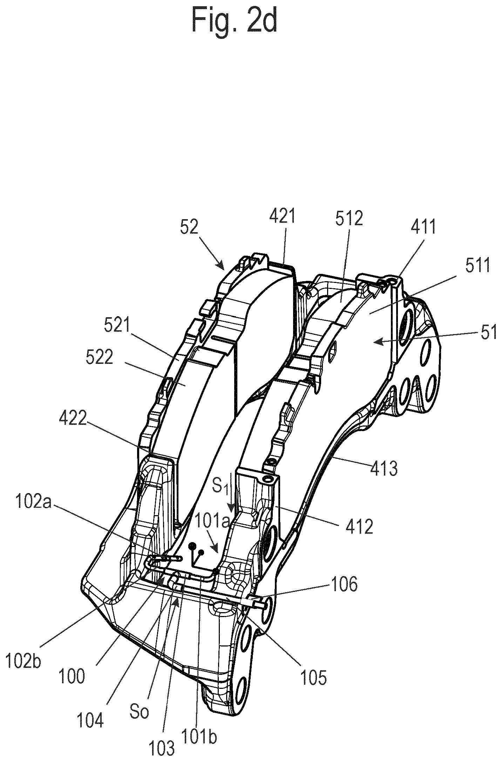

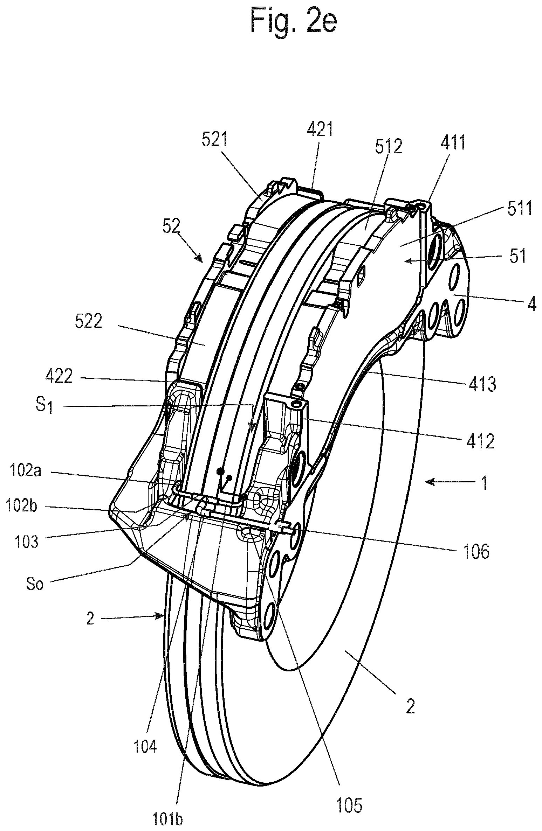

- Fig. 2: in a) ein Abdeckblech und eine Absaugrohranordnung der Scheibenbremse aus Fig. 1 in einer Sprengansicht, in b) eine perspektivische Ansicht eines Teilbereiches eines Bremsträgers mit einer Absaugrohranordnung der Scheibenbremse aus Fig. 1 und in c) eine perspektivische Ansicht der Absaugrohranordnung aus a) und b) sowie in d) eine perspektivische Ansicht eines Bremsträgers mit darin eingesetzten Bremsbelägen und mit einer Absaugrohranordnung der Scheibenbremse aus Fig. 1 und in e) eine perspektivische Ansicht eines Bremsträgers mit darin eingesetzten Bremsbelägen sowie einer Bremsscheibe und mit einer Absaugrohranordnung der Scheibenbremse aus Fig. 1;
- Fig. 3: eine zweite erfindungsgemäße Scheibenbremse in einer perspektivischen Ansicht;
- Fig. 4: ein Abdeckblech und eine Absaugrohranordnung der Scheibenbremse aus Fig. 3 in einer Sprengansicht;
- Fig. 5: eine dritte erfindungsgemäße Scheibenbremse in einer perspektivischen Ansicht;
- Fig. 6: eine Absaugrohranordnung der Scheibenbremse aus Fig. 5 in einer Sprengansicht;

In den **Fig. 1****,** **3** **und** **5** ist jeweils eine Scheibenbremse mit einem eine Bremsscheibe 1 übergreifenden, hier rahmenartigen Bremssattel 3 gezeigt. Dieser Bremssattel 3 ist hier beweglich, insbesondere verschieblich an einem Bremsträger 4 angeordnet, welcher an einem Schenkel einer Fahrzeugachse (hier nicht dargestellt) befestigbar ist. Der Bremssattel 3 kann im Rahmen der Erfindung beispielsweise als Schwenksattel, Schiebesattel oder Festsattel (ohne Bremsträger) ausgebildet sein.

In dem Bremssattel 3 und ggf. in dem Bremsträger 4 sind beidseits der Bremsscheibe 1 jeweils Bremsbeläge 51, 52 angeordnet. Diese Bremsbeläge weisen jeweils eine Rückenplatte 511, 521 und einen Reibbelag 512, 522 auf **(****Fig. 2d****,** **Fig. 2e****).**

Der Bremssattel 3 weist hier eine zentrale Öffnung 6 oberhalb der Bremsscheibe 1 auf, durch welche die Bremsbeläge 51, 52 montierbar und demontierbar sind, insbesondere, um sie bei einem Belagwechsel auszutauschen.

Diese Öffnung 6 ist teilweise, im Wesentlichen oder ganz; also im Sinne der Ansprüche und dieser Beschreibung zu mehr als 30% insbesondere mehr als 50 % oder mehr als 95%, mit wenigstens einem Abdeckelement, insbesondere mit einem Abdeckblech 7 abgedeckt.

Das Abdeckblech 7 ist demontierbar, um die Bremsbeläge 51, 52 wechseln zu können. Das Abdeckblech 7 ist hier einstückig ausgebildet. Es kann aber auch mehrstückig ausgebildet sein. Es kann eines oder mehrere Öffnungen zur optischen Kontrolle und/oder zur Lüftung aufweisen.

Das Abdeckblech 7 kann ein längliche, in etwa rechteckige Form aufweisen, wenn die Form der Öffnung 6 entsprechend gestaltet ist. Es kann eine oder mehrere umgekantete Seitenabschnitte aufweisen, mit denen es in die Sattelöffnung eingeklemmt werden kann. Das Abdeckblech 7 kann derart, aber auch ergänzend oder alternativ auf andere Weise am Bremssattel 3 befestigt sein, beispielsweise mittels Schrauben an einem Niederhaltebügel zum Niederhalten der Bremsbeläge befestigt sein (der Niederhaltebügel ist hier nicht zu erkennen).

Der Bremsträger 4 kann einseitig oder bevorzugt rahmenartig ausgestaltet sein. Im letzteren Fall umgreift er rahmenartig den oberen Bremsscheibenrand. Der Bremsträger 4 trägt den Bremssattel 3. Hier ist der Bremssattel 3 vorzugsweise verschieblich an dem Bremsträger 4 angeordnet. Der Bremsträger 4 kann bei rahmenartiger Ausgestaltung beidseits der Bremsscheibe jeweils einen Belagschacht 41, 42 für die Bremsbeläge 51, 52 aufweisen (Fig. 2b, 2d). Diese Belagschächte 41, 42 sind in Umfangsrichtung von Bremsträgerhörnern 411, 412; 421, 422 begrenzt und nach unten hin von einer Strebe 413, 423. An der Strebe 413, 423 und den Bremsträgerhörnern 411, 412; 421, 422 sind jeweils Abstützflächen ausgebildet. Der Bremsträger 4 kann fahrzeugseitig in einem Achsbereich an einem Fahrzeug befestigt werden **(Fig. 1a, Fig.1b;** **Fig. 2a****,** **Fig. 2d****,** **Fig. 2e****).**

Hier sind in dem Bremsträger 4 beidseits der Bremsscheibe 1 jeweils die Bremsbeläge 51, 52 in die Belagschächte 41, 42 eingesetzt. Die Bremsbeläge 51, 52 sind hier beidseits der Bremsscheibe 1 jeweils korrespondierend in die Bremsbelagschächte 41, 42 eingesetzt **(****Fig. 2d****,** **Fig. 2e****).**

Die Bremsscheibe 1 hat eine Drehachse D. Diese ist in einem kartesischen Koordinatensystem parallel zu einer X-Achse ausgerichtet. Die Reibringflächen 2 der ringförmigen Bremsscheibe 1 erstrecken sich demgegenüber parallel zu einer bzw. in einer Y-/Z-Ebene. Die Y-Richtung ist tangential zur Umfangsrichtung (Siehe **Fig. 1****).** Die bevorzugte Drehrichtung in Umfangsrichtung (bezogen auf Vorwärtsfahrten eines Fahrzeugs) ist mit U bezeichnet.

Die Bremsbeläge 51, 52 werden in der Regel direkt oder indirekt über eine Feder in den Belagschächten 41, 42 des Bremsträgers 4 mit Hilfe eines Niederhaltebügels gehalten, der sich quer über die Öffnung 6 des Bremssattels 3 erstreckt (Fig. **2d****,** **Fig. 2e****).**

Die Bremsbeläge 51, 52 sind bei Bremsungen jeweils mit ihrem Reibbelag 512, 522 beidseitig an Reibringflächen 2 **(****Fig. 1****)** der vorzugsweise innenbelüfteten Bremsscheibe 1 anpressbar. Dazu ist der Scheibenbremse ein Aktuator (hier nicht dargestellt) zugeordnet. Dieser kann ein Elektromotor sein oder ein Pneumatik- oder ein Hydraulik- und/oder ein Federaktuator. Dieser Aktuator kann über eine Zuspannmechanik - hier im Inneren des Bremssattels 3 - auf einen oder beide Reibbeläge 51, 52 einwirken, um diese gegen die Bremsscheibe 1 zu drücken. Bei einer Schiebesattelbremse wird insofern beispielsweise der eine der beiden Bremsbeläge 51, 52 gegen die Bremsscheibe 1 gedrückt, während der andere der beiden Bremsbeläge 51, 52 z.B. mit dem Bremssattel 3 gegen die andere Seite der Bremsscheibe 1 gezogen wird. Die Zuspannmechanik umfasst ferner eine Nachstelleinrichtung zum Einstellen des Lüftspiels, das sich infolge von Belag- und Scheibenverschleiß im Betrieb verändert.

Bei den Bremsungen wird das zwischen den Bremsungen vorhandene Lüftspiel bzw. der jeweilige Spalt zwischen den Bremsbelägen 51, 52 und der Bremsscheibe 1 überwunden. Infolge der entstehenden Reibung tritt bei Bremsungen an den Reibbelägen 51, 52 und auch an der Bremsscheibe 1 Abrieb auf.

Dieser Abrieb wird abgesaugt. Derart wird diese Scheibenbremse in Hinsicht auf den Abrieb auch den Anforderungen an den Umweltschutz gerecht.

Durch das Abdeckblech 7 wird zunächst auf einfache Weise verhindert, dass der Abrieb, der infolge der Drehung der Bremsscheibe 1 nach außen geschleudert wird, durch die Öffnung 6 ungehindert nach außen dringt. Er wird vielmehr im Wesentlichen in Umfangsrichtung an diesem Abdeckblech entlang geschleudert.

Da aber die Umgebung des Fahrzeugs, vornehmlich die Verhältnisse im Radkasten und innerhalb der Felge, durch den Fahrtwind für eine diffuse Verwirbelung des entstehenden Bremsstaubs sorgen, werden noch weitere Maßnahme zur Minimierung des in die Umgebung gelangenden Abriebs getroffen. Zudem können die Abdeckbleche 7 kaum derart gestaltet werden, dass die Bremse komplett gekapselt ist. Eine Kapselung der Scheibenbremse könnte insofern zu leicht zu thermischen Problemen der Reibpaarung führen.

Ergänzend ist am Fahrzeug, dass mit der Scheibenbremse ausgerüstet wird, daher wenigstens eine Absaug- und Abscheideanlage, vorgesehen (hier nicht dargestellt), die ein hier nicht dargestelltes Sauggebläse oder dgl. aufweisen kann, mit welchen der Abrieb zu einer Entstaubungsvorrichtung geführt wird. Diese kann eine oder mehrere Abscheide- und/oder Filterstufen aufweisen. Die austretende abriebfreie Luft kann beispielsweise über einen dem Sauggebläse nachgeordneten Schalldämpfer in die Umgebung abgegeben werden. Der Abrieb wird gesammelt und separat entsorgt.

Die Absaug- und Abscheideanlage außerhalb der Scheibenbremse am Fahrzeug kann für eine oder mehrere der Scheibenbremsen des Fahrzeuges ausgelegt sein bzw. genutzt werden. Beispielhaft sei auf die EP 2 585 730 B1 verwiesen, welche Komponenten einer solchen Anlage offenbart.

Das Sammeln des Abriebs direkt am Ort der Entstehung, also an der einzelnen Scheibenbremse erfolgt mittels einer in die Scheibenbremse integrierten, wechselbaren Absaugrohranordnung 100, 110, 120, welche dazu ausgelegt ist, den Abrieb direkt in Nähe der Kontaktfläche zwischen der Bremsscheibe 1 und dem jeweiligen Reibbelag 511, 521 zu sammeln **(****Fig.1****,** **3****,** **5****).**

Die Absaugrohranordnung 100 ist derart gestaltet, dass sie sowohl in einen im Wesentlichen axial verlaufenden Spalt S0 zwischen dem Bremssattel 3 und dem Bremsträger 4 eintaucht als auch in die beiden Spalte S1, S2 zwischen Bremsscheibe 1 und Bremsträger 4 beidseits der Bremsscheibe 1. Sodann kann der den entstehende Bremsstaub mittels einer an die Absaugrohranordnung 100 der Scheibenbremse anschließbaren fahrzeugseitigen Absaug- und Abscheideanlage mit einem Absauglüfter abgesaugt und gesammelt werden.

Geschaffen wird dabei eine Scheibenbremse mit einer Absaugrohranordnung 100, 110, 120 die eine Einheit von den Ansaugorten bis einer zur Absaug- und Abscheideanlage ausbildet. Im ausgeführten Beispiel der Fig. 1 werden zwei Absaugrohre 101, 102 die mittels eines T-Stücks 102 verbunden sein können, in den jeweiligen axialen Spalt S0 zwischen Bremsträger 4 und Bremssattel 3 sowie in den jeweiligen entsprechenden Spalt S1, S2 zwischen Bremsträger 4 und Bremsscheibenreibfläche 2, 2 platziert, so dass ihr freies Ende in den Spalt S1, S2 radial oder im Wesentlichen radial hineintaucht bzw. hinein ragt.

Die Absaugrohre 101a, 101b, 111, 121 können direkt am Bremsträger 4 befestigt werden, z.B. mittels Befestigungsmitteln wie Befestigungsklipsen 1011, 1021.

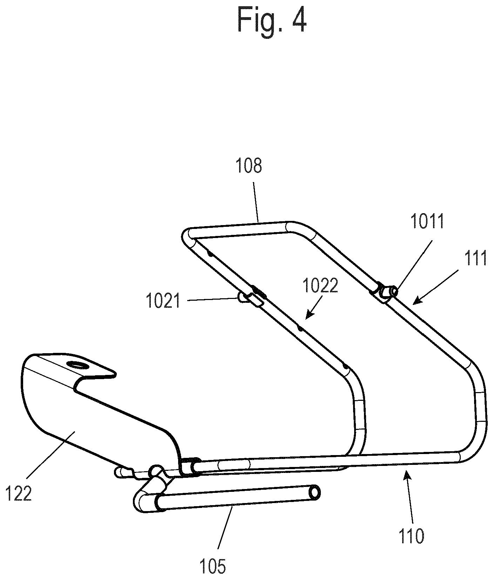

Die Absaugrohre 101a, 101b, 111, 121 der Absaugrohranordnungen 100, 110, 120 können eine oder mehrere Ansaugöffnungen 1022 aufweisen (Fig. 4, sichtbar an 102a, analog vorgesehen aber nicht sichtbar an 101a und/oder 101b, 102b und in den weiteren Ausgestaltungen). Die Ansaugöffnungen 1022 können direkt am Außenumfang der Absaugrohranordnungen 100, 110, 120 verteilt sein, so dass von der Absaug- und Abscheideanlage angesaugte Luft und Partikel zunächst durch die Ansaugöffnungen 1022 in die Absaugrohranordnungen 100, 110, 120 gesaugt wird (siehe insbesondere **Fig. 4****).** In **Fig. 4** sind die Ansaugöffnungen 1022 gut erkennbar dargestellt. Die Ansaugöffnungen in einem gegenüberliegenden Abschnitt des Absaugrohrs 111 sind hier nicht sichtbar. Die Ansaugöffnungen 1022 können im montierten Zustand in Richtung der Bremsscheibe 1 orientiert sein. Sie können aber auch in andere Richtung orientiert sein.

Zwei der Absaugrohre 101, 102 können wie in **Fig. 1** und 2a - **e** dargestellt, beispielsweise jeweils eine Art L-Stück bilden. Ihr Querschnitt kann weitgehend beliebig gewählt werden, z.B. rund oder eckig sein.

Ein erster Schenkel 101a, 102a der jeweiligen Absaugrohre 101, 102 kann in etwa zwischen jeweils einem der Bremsträgerhörner 411, 412; 421, 422 und der Bremsscheibe 1 in einem radialen Spalt S1, S2 verlaufen und sich vorzugsweise etwas radial über den radialen Außenumfang der Bremsscheibe 1 hinaus erstrecken (siehe dazu ergänzend **Fig. 2b****,** **Fig. 2d** **sowie** **Fig. 2e****)**

Ein jeweils dazu jeweils rechtwinklig ausgerichteter zweiter Schenkel 101b, 102b der jeweiligen Absaugrohre 101, 102 kann sodann in dem axialen Spalt S0 zwischen dem Bremssattel 3 und dem Bremsträger 4 verlaufen. Die Enden dieser beiden aufeinander zu gerichteten Schenkel 101b, 102b können dann mit gegenüberliegende Enden eines T-Stückes 103 verbunden sein, beispielswiese in dieses eingreifen.

Diese Einheit (aus den zwei Absaugrohren 101, 102 und dem T-Stück 103) kann wiederum über ein Zwischenelement wie ein L-Stück 104 mit einem Anschlussrohr/Verbindungsrohr 105 verbunden sein.

Das zur Absaugrohranordnung 100 bzw. -einheit gehörendes Anschlussrohr/Verbindungsrohr 105 kann dann die Schnittstelle zur Absaug- und Abscheideanlage bilden oder aufweisen. Dabei ist zu beachten, dass diese Schnittstelle beliebig ausgestaltet werden kann. Sie kann beispielsweise als eine handelsübliche Form eines Schlauchanschlusses ausgeführt werden (z.B. Steckverbindungen, Kupplungen, etc.).

Die komplette Einheit bzw. die Absaugrohranordnung 100, 110, 120 kann beispielsweise mittels einer Befestigung wie einer Lasche 106 am Bremsträger 4 z.B. mit einer Schraube 107 verschraubt sein, so dass sie einerseits sicher befestigt aber andererseits leicht wechselbar ist.

Die Funktion dieser Anordnung ist wie folgt:
Der Bremsstaub bzw. Abrieb wird bei der Bremsung über das Abdeckblech 4 in Umfangsrichtung in Richtung der Absaugrohranordnung 100 weitergeleitet.

Bedingt durch die Drehrichtung U der Bremsscheibe 1, welche der Drehrichtung in Vorwärtsrichtung entspricht, wird der bei Bremsungen entstehende Abrieb bzw. Bremsstaub zwangsläufig in Richtung der Absaugrohranordnung 100 geleitet.

Diese wird daher vorzugsweise in Umfangsrichtung an der Auslaufseite der Bremsscheibe 1 am Bremsträger 4 (wiederum bezogen auf eine Vorwärtsfahrt eines Fahrzeugs) angeordnet.

Hinsichtlich der geometrischen Ausführung und Anbindung an das Gesamtsystem, werden im Folgenden weitere Ausführungsvarianten beschrieben.

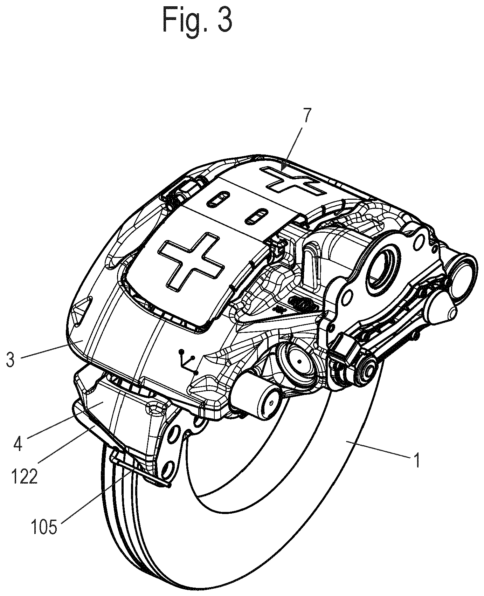

Die Ausführungsvariante nach **Fig. 3****,** **4** zeichnet sich durch ein zu einem umfangsgeschlossenen Kreislauf geschlossenes Absaugrohr 111 aus. Die zwei in **Fig. 2a** einzeln vorgesehenen L-förmigen Absaugrohre 101, 102 sind somit quasi an ihren Enden - hier über einen U-förmigen Bereich 108, der sich von einem radial inneren Bereich jeweils über Biegungen wieder radial nach außen erstreckt - miteinander verbunden, wobei der radial äußerste Bereich radial außerhalb des größten Außenumfangs der Bremsscheibe 1 liegt. Derart wird gegenüber dem Ausführungsbeispiel der **Fig. 1** der Bereich, in welchem Bremsstaub angesaugt werden kann, verlängert.

Ein weiteres vorteilhaftes Merkmal, welches bei dieser Variante der **Fig. 3** **und** **4** umgesetzt wurde, aber auch bei anderen Varianten zur Anwendung kommen kann, liegt darin, dass die komplette Absaugrohranordnung 110 unterhalb des Bremsträgers 4 (bezogen auf den Bremssattel 3) mit einem Trägerblech 122 am Bremsträger 4 angebunden, hier angeschraubt, wird. Dies ist gerade auch in Hinsicht auf die beengten Bauraumverhältnisse im Bereich der Scheibenbremse vorteilhaft.

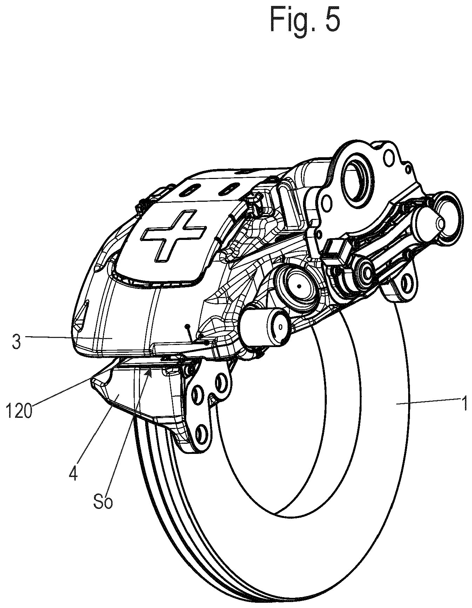

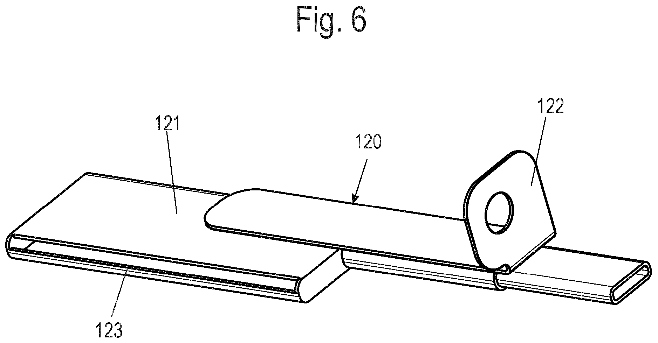

Die Ausführungsvariante nach **Fig. 5** **und** **6** zeigt eine Absaugrohranordnung 120 mit einem einzigen Absaugrohr 101, das als ein geschlitztes O-Profil ausgebildet sein kann und welches im Wesentlichen axial zwischen Bremsträger 4 und Bremssattel 3 eingebaut und mit einem angeschweißten Trägerblech 122 an den Bremsträger 4 angeschraubt ist. Radiale Rohrabschnitte in Spalten zwischen Bremsträger 4 und Bremsscheibe 1 sind bei dieser besonders einfach wirkenden Absaugrohranordnung 120 quasi nicht vorhanden Der Schlitz 123 dient als Ansaugöffnung dieses Ausführungsbeispiels. Es könnten auch andere Ansaugöffnungen vorgesehen sein. Ein besonderer Vorteil dieser Variante liegt darin, dass in dem beengten Bauraum zwischen Bremsscheibe 1 und Bremsträger 4 kein Ansaugrohr anzuordnen ist.

### Bezugszeichenliste

- Bremsscheibe: 1
- Reibringflächen: 2
- Bremssattel: 3
- Bremsträger: 4
- Belagschächte: 41, 42
- Bremsträgerhörner: 411, 412; 421, 422
- Strebe: 413, 423
- Bremsbeläge: 51, 52
- Rückenplatte: 511, 521
- Reibbelag: 512, 522
- Öffnung: 6
- Abdeckung: 7

- Absaugrohranordnung: 100
- Absaugrohre: 101, 102
- erster Schenkel: 101a, 102a
- zweiter Schenkel: 101b, 102b
- T-Stück: 103
- L-Stück: 104
- Anschlussrohr: 105
- Lasche: 106
- Schraube: 107
- Ansatz: 108
- Befestigungsklipse: 1011, 1021
- Ansaugöffnungen: 1022

- Absaugrohranordnung: 110
- Absaugrohr: 111

- Absaugrohranordnung: 120
- Absaugrohr: 121
- Trägerblech: 122
- Schlitz: 123

- Spalt: S0, S1, S2

## Patentansprüche

1. Scheibenbremse, mit
a. einem eine Bremsscheibe (1) übergreifenden Bremssattel (3) und
b. einem einen Bremsscheibenrand der Bremsscheibe (1) umgreifenden rahmenartigen Bremsträger (4) mit Belagschächten beidseits der Bremsscheibe (1), in welche jeweils Bremsbeläge (51, 52) eingesetzt sind, die jeweils einen Reibbelag (512, 522) und eine Rückenplatte (511, 521) aufweisen,
c. wobei der Bremssattel (3) eine Öffnung (6) oberhalb der Bremsscheibe (1) aufweist, durch welche die Bremsbeläge (51, 52) in die Belagschächte einsetzbar sind,
d. wobei die Bremsbeläge (51, 52) jeweils mit ihrem Reibbelag (512, 522) an Reibringflächen (2) der Bremsscheibe (1) anpressbar sind,
e. und mit einer Absaugrohranordnung (100, 110, 120) zum Absaugen von bei Bremsungen entstehenden Abrieb,
**dadurch gekennzeichnet, dass**
f. die Öffnung (6) teilweise, im Wesentlichen oder ganz mit wenigstens einem Abdeckelement, insbesondere mit einem am Bremssattel (4) befestigten Abdeckblech (7) abgedeckt ist und
g. die Absaugrohranordnung (100, 110, 120) eines oder mehrere Absaugrohre (101, 102, 111, 121) umfasst und dass sie als eine wechselbare Einheit ausgebildet ist, die am Bremsträger (4) befestigt ist.

2. Scheibenbremse nach Anspruch 1, **dadurch gekennzeichnet, dass** das die Absaugrohranordnung (100, 110, 120) - bezogen auf eine bevorzugte Drehrichtung der Bremsscheibe (1) - auslaufseitig am Bremsträger (4) befestigt ist.

3. Scheibenbremse nach Anspruch 1 oder 2, **dadurch gekennzeichnet, dass** die Absaugrohranordnung (100, 110, 120) mittels einer Befestigungsschraube (107), die ein Befestigungselement, insbesondere ein Befestigungsblech (106) durchsetzt, das mit einem oder mehreren der Absaugrohre (101, 102, 111, 121) verbunden ist, an den Bremsträger (4) angeschraubt ist.

4. Scheibenbremse nach Anspruch 3, **dadurch gekennzeichnet, dass** die Absaugrohranordnung (100, 110, 120) an eine Axialseite des Bremsträger (4) angeschraubt ist.

5. Scheibenbremse nach Anspruch 3, **dadurch gekennzeichnet, dass** die Absaugrohranordnung (100, 110, 120) bezogen auf den Bremssattel (3) an die Unterseite des Bremsträger (4) angeschraubt ist.

6. Scheibenbremse nach einem der vorstehenden Ansprüche, **dadurch gekennzeichnet, dass** das oder die Absaugrohre (101, 102, 111, 121) der Absaugrohranordnung (100, 110, 120) ferner mittels Befestigungsmitteln wie Befestigungsklipsen (1011, 1021) am Bremsträger (4) befestigt ist/sind.

7. Scheibenbremse nach einem der vorstehenden Ansprüche, **dadurch gekennzeichnet, dass** die Absaugrohranordnung (100, 110, 120) eine Schnittstelle aufweist, an welche eine Absaug- und Abscheideanlage eines Fahrzeugs anschließbar ist.

8. Scheibenbremse nach einem der vorstehenden Ansprüche, **dadurch gekennzeichnet, dass** die Absaugrohranordnung (100, 110, 120) zwei oder mehre einzelne endseitig offene Absaugrohre (101, 102, 121) aufweist, die in ein gemeinsames Absaugrohr zusammengeführt sind, an dem die Schnittstelle ausgebildet ist.

9. Scheibenbremse nach einem der vorstehenden Ansprüche, **dadurch gekennzeichnet, dass** die Absaugrohranordnung (100, 110, 120) wenigstens ein umfangsgeschlossenes ringartiges Absaugrohre (101, 102) aufweist, dass in ein weiteres Absaugrohr (105) mündet, an dem die Schnittstelle ausgebildet ist.

10. Scheibenbremse nach einem der vorstehenden Ansprüche, **dadurch gekennzeichnet, dass** die Absaugrohranordnung (100, 110, 120) ein sich axial erstreckendes Absaugrohr oder einen sich axial erstreckenden Abschnitt eines Absaugrohres aufweist, welches/welcher in einen axialen Spalt (S0) zwischen dem Bremssattel (3) und dem Bremsträger (4) eingreift.

11. Scheibenbremse nach einem der vorstehenden Ansprüche, **dadurch gekennzeichnet, dass** die Absaugrohranordnung (100, 110, 120) wenigstens zwei sich radial erstreckendes Absaugrohre (101, 102, 111, 121) aufweist, welche jeweils in einen radialen Spalt (S1, S2) zwischen dem Bremsträger (4) und der Bremsscheibe (1) beidseits der Bremsscheibe (1) eingreifen.

12. Scheibenbremse nach einem der vorstehenden Ansprüche, **dadurch gekennzeichnet, dass** das oder die Absaugrohre (101, 102, 111, 121) jeweils eine oder mehrere Ansaugöffnungen (1022) aufweisen.

13. Scheibenbremse nach einem der vorstehenden Ansprüche, **dadurch gekennzeichnet, dass** die Absaugrohranordnung (100, 110, 120) ein Absaugrohr (121) aufweist, dass als an einer Seite geschlitztes Profil ausgebildet ist.

## Claims

1. Disc brake, having
- a brake caliper (3) which engages over a brake disc (1) and
b. a frame-like brake carrier (4) which engages around a brake disk edge of the brake disc (1) and has lining shafts on both sides of the brake disk (1), into each of which lining shafts brake linings (51, 52) are inserted, which each have a friction lining (512, 522) and a rear plate (511, 521),
c. wherein the brake caliper (3) has an opening (6) above the brake disk (1), through which opening the brake linings (51, 52) can be inserted into the lining shafts,
d. wherein the brake linings (51, 52) can each be pressed with their friction lining (512, 522) onto friction ring surfaces (2) of the brake disk (1),
e. and a suction pipe arrangement (100, 110, 120) for suctioning abraded particles produced during braking,
**characterized in that**
f. the opening (6) is covered partially, substantially or completely by at least one cover element, in particular by a cover sheet (7) fastened to the brake caliper (4),
g. the suction pipe arrangement (100, 110, 120) comprises one or more suction pipes (101, 102, 111, 121) and is configured as a replaceable unit that is fastened to the brake carrier (4).

2. Disc brake according to claim 1, **characterized in that** the suction pipe arrangement (100, 110,120) is fastened to the brake carrier (4) on the outlet side, relative to a preferred direction of rotation of the brake disc (1).

3. Disc brake according to claim 1 or 2, **characterized in that** the suction pipe arrangement (100, 110, 120) is screwed to the brake carrier (4) by means of a fastening screw (107), which passes through a fastening element, in particular a fastening plate (106), which is connected to one or more of the suction pipes (101, 102, 111, 121).

4. Disc brake according to claim 3, **characterized in that** the suction pipe arrangement (100, 110, 120) is screwed onto an axial side of the brake carrier (4).

5. Disc brake according to claim 3, **characterized in that** the suction pipe arrangement (100, 110, 120) is screwed to the underside of the brake carrier (4) relative to the brake caliper (3).

6. Disc brake according to any one of the preceding claims, **characterized in that** the suction pipe or suction pipes (101, 102, 111, 121) of the suction pipe arrangement (100, 110, 120) are also fastened to the brake carrier (4) by means of fastening elements such as fastening clips (1011, 1021).

7. Disc brake according to any one of the preceding claims, **characterized in that** the suction pipe arrangement (100, 110, 120) has an intersection point to which a suction and separation system of a vehicle can be connected.

8. Disc brake according to any one of the preceding claims, **characterized in that** the suction pipe arrangement (100, 110, 120) has two or more individual suction pipes (101, 102, 121) which are open at one end and are brought together in a common suction pipe on which the intersection point is formed.

9. Disc brake according to any one of the preceding claims, **characterized in that** the suction pipe arrangement (100, 110, 120) has at least one circumferentially closed ringshaped suction pipe (101, 102), which opens into a further suction pipe (105) on which the intersection point is formed.

10. Disc brake according to any one of the preceding claims, **characterized in that** the suction pipe arrangement (100, 110, 120) has an axially extending suction pipe or an axially extending section of a suction pipe, which engages in an axial gap (S0) between the brake caliper (3) and the brake carrier (4).

11. Disc brake according to any one of the preceding claims, **characterized in that** the suction pipe arrangement (100, 110, 120) has at least two radially extending suction pipes (101, 102, 111, 121), which each engage in a radial gap (S1, S2) between the brake carrier (4) and the brake disc (1) on both sides of the brake disc (1).

12. Disc brake according to any one of the preceding claims, **characterized in that** the suction pipe or suction pipes (101, 102, 111, 121) each have one or more suction openings (1022).

13. Disc brake according to any one of the preceding claims, **characterized in that** the suction pipe arrangement (100, 110, 120) has a suction pipe (121) which is configured as a profile slotted on one side.

## Revendications

1. Frein à disque avec
a. un étrier de frein (3) chevauchant un disque de frein (1) et
b. un support de frein (4) en forme de cadre entourant un bord de disque de frein du disque de frein (1) avec des logements de garniture des deux côtés du disque de frein (1), dans lesquels sont insérées respectivement des plaquettes de frein (51, 52) qui présentent respectivement une garniture de friction (512, 522) et une plaque dorsale (511, 521),
c. dans lequel l'étrier de frein (3) présente une ouverture (6) au-dessus du disque de frein (1), par laquelle les plaquettes de frein (51, 52) peuvent être insérées dans les logements de garniture,
d. dans lequel les plaquettes de frein (51, 52) peuvent être pressées respectivement avec leur garniture de friction (512, 522) contre des surfaces d'anneau de friction (2) du disque de frein (1),
e. et avec un ensemble de tubes d'aspiration (100, 110, 120) pour l'aspiration des résidus d'abrasion produits lors de freinages,
**caractérisé en ce que**
f. l'ouverture (6) est recouverte partiellement, sensiblement ou entièrement avec au moins un élément de recouvrement, en particulier avec une tôle de recouvrement (7) fixée à l'étrier de frein (4) et
g. l'ensemble de tubes d'aspiration (100, 110, 120) comprend un ou plusieurs tubes d'aspiration (101, 102, 111, 121) et **en ce qu'**il est formé comme une unité interchangeable qui est fixée au support de frein (4).

2. Frein à disque selon la revendication 1, **caractérisé en ce que** l'ensemble de tubes d'aspiration (100, 110, 120) est fixé - par rapport à un sens de rotation préféré du disque de frein (1) - côté sortie au support de frein (4).

3. Frein à disque selon la revendication 1 ou 2, **caractérisé en ce que** l'ensemble de tubes d'aspiration (100, 110, 120) est vissé au moyen d'une vis de fixation (107) qui traverse un élément de fixation, en particulier une tôle de fixation (106) qui est reliée à un ou plusieurs des tubes d'aspiration (101, 102, 111, 121), au support de frein (4).

4. Frein à disque selon la revendication 3, **caractérisé en ce que** l'ensemble de tubes d'aspiration (100, 110, 120) est vissé à un côté axial du support de frein (4).

5. Frein à disque selon la revendication 3, **caractérisé en ce que** l'ensemble de tubes d'aspiration (100, 110, 120) est vissé par rapport à l'étrier de frein (3) au côté inférieur du support de frein (4).

6. Frein à disque selon l'une quelconque des revendications précédentes, **caractérisé en ce que** le ou les tubes d'aspiration (101, 102, 111, 121) de l'ensemble de tubes d'aspiration (100, 110, 120) est/sont fixés de plus à l'aide de moyens de fixation tels que des clips de fixation (1011, 1021) au support de frein (4).

7. Frein à disque selon l'une quelconque des revendications précédentes, **caractérisé en ce que** l'ensemble de tubes d'aspiration (100, 110, 120) présente une interface, à laquelle peut être raccordée une installation d'aspiration et de séparation d'un véhicule.

8. Frein à disque selon l'une quelconque des revendications précédentes, **caractérisé en ce que** l'ensemble de tubes d'aspiration (100, 110, 120) présente deux ou plusieurs tubes d'aspiration (101, 102, 121) individuels ouverts côté extrémité qui sont réunis en un tube d'aspiration commun, au niveau duquel l'interface est formée.

9. Frein à disque selon l'une quelconque des revendications précédentes, **caractérisé en ce que** l'ensemble de tubes d'aspiration (100, 110, 120) présente au moins un tube d'aspiration (101, 102, 121) annulaire fermé sur la périphérie qui débouche dans un autre tube d'aspiration (105), au niveau duquel l'interface est formée.

10. Frein à disque selon l'une quelconque des revendications précédentes, **caractérisé en ce que** l'ensemble de tubes d'aspiration (100, 110, 120) présente un tube d'aspiration s'étendant axialement ou une section s'étendant axialement d'un tube d'aspiration qui vient en prise dans une fente (S0) axiale entre l'étrier de frein (3) et le support de frein (4).

11. Frein à disque selon l'une quelconque des revendications précédentes, **caractérisé en ce que** l'ensemble de tubes d'aspiration (100, 110, 120) présente au moins deux tubes d'aspiration (101, 102, 111, 121) s'étendant radialement qui viennent en prise respectivement dans une fente radiale (S1, S2) entre le support de frein (4) et le disque de frein (1) des deux côtés du disque de frein (1).

12. Frein à disque selon l'une quelconque des revendications précédentes, **caractérisé en ce que** le ou les tubes d'aspiration (101, 102, 111, 121) présentent respectivement une ou plusieurs ouvertures d'aspiration (1022).

13. Frein à disque selon l'une quelconque des revendications précédentes, **caractérisé en ce que** l'ensemble de tubes d'aspiration (100, 110, 120) présente un tube d'aspiration (121) qui est formé comme profilé fendu au niveau d'un côté.
